Europäisches Patentamt

European Patent Office

Office européen des brevets

(11) Numéro de publication: **0 107 233**
**B1**

(12) **FASCICULE DE BREVET EUROPEEN**

(45) Date de publication du fascicule du brevet: **28.01.87**

(21) Numéro de dépôt: **83201433.6**

(22) Date de dépôt: **07.10.83**

(51) Int. Cl.⁴: **H 04 B 3/23**

(54) **Annuleur d'écho pour signal de données en bande de base.**

(30) Priorité: **11.10.82 FR 8216998**

(43) Date de publication de la demande:
**02.05.84 Bulletin 84/18**

(45) Mention de la délivrance du brevet:
**28.01.87 Bulletin 87/05**

(84) Etats contractants désignés:
**BE CH DE FR GB IT LI NL SE**

(56) Documents cités:
**GB-A-2 075 313**
**GB-A-2 086 193**

**PATENTS ABSTRACTS OF JAPAN, vol. 4, no. 18, 13 février 1980, page 108 E 171**

(73) Titulaire: **TELECOMMUNICATIONS RADIOELECTRIQUES ET TELEPHONIQUES T.R.T.**
**88, rue Brillat Savarin**
**F-75013 Paris (FR)**

(72) Inventeur: **Brie, Richard**
**SOCIETE CIVILE S.P.I.D. 209 rue de l'Université**
**F-75007 Paris (FR)**
Inventeur: **Guidoux, Loic Bernard Yves**
**SOCIETE CIVILE S.P.I.D. 209 rue de l'Université**
**F-75007 Paris (FR)**

(74) Mandataire: **Charpail, François et al**
**Société Civile S.P.I.D. 209, rue de l'Université**
**F-75007 Paris (FR)**

EP 0 107 233 B1

Courier Press, Leamington Spa, England.

# 0 107 233

**Description**

L'invention concerne un annuleur d'écho utilisé dans un modem de transmission de données pour annuler dans le signal en bande de base de la voie réception, un signal d'écho engendré par le signal de données de la voie émission, cet annuleur d'écho comprenant un circuit de différence pour former un signal de différence entre le signal de la voie réception et un signal de copie d'écho, ce signal de différence étant appliqué à un circuit de décision restituant le signal de données, le signal de copie d'écho étant formé à une fréquence d'échantillonnage $F_e$ au moins égale à la fréquence 1/T des données de la voie émission, à l'aide d'un dispositif de traitement numérique réglable qui est connecté à la voie émission et qui comprend au moins un filtre transversal fonctionnant à des instants d'échantillonnage de fréquence 1/T et ayant des coefficients qui sont réglés pour rendre minimale une fonction prédéterminée d'un signal d'erreur.

Les annuleurs d'écho sont utilisés dans des modems dont les voies unidirectionnelles émission et réception sont couplées par un circuit de couplage de façon que ces modems aient avec l'extérieur un accès deux fils. On sait que lorsqu'on établit une liaison entre deux modems par leurs accès deux fils, il peut se produire intempestivement, dans la voie réception d'un modem, un signal d'écho créé par le signal dans la voie émission du même modem et dû à des imperfections de son circuit de couplage et/ou des réflexions de signaux dans la liaison. Un annuleur d'écho a pour but d'annuler automatiquement ce signal d'écho intempestif qui se superpose dans la voie réception d'un modem local au signal utile provenant du modem distant, dans le cas d'une transmission en duplex simultané.

Des annuleurs d'écho en bande de base trouvent évidemment une utilisation directe dans des modems de transmission de données en bande de base. Mais on peut utiliser aussi des annuleurs d'écho en bande de base dans des modems de transmission de données par modulation d'une porteuse, en faisant travailler ces annuleurs d'écho sur les signaux en bande de base résultant dans le récepteur de la démodulation du signal reçu.

Pour exposer certains problèmes qui se posent dans un annuleur d'écho du genre mentionné ci-dessus, on rappelle brièvement son fonctionnement. Il est suffisant de considérer le cas où le dispositif de traitement numérique réglable se compose d'un seul filtre transversal fonctionnant à des instants d'échantillonnage ayant la fréquence 1/T des données, de sorte que la fréquence d'échantillonnage $F_e$ dans l'annuleur d'écho est égale à cette fréquence 1/T. Ce filtre transversal numérique travaille donc à des instants d'échantillonnage de fréquence 1/T sur le signal de données de la voie émission et ses coefficients sont à régler pour qu'il engendre à ces instants d'échantillonnage un signal dit de copie d'écho, simulant le signal d'écho apparaissant dans la voie réception. Ce signal numérique de copie d'écho est converti en analogique, puis appliqué à un circuit de différence pour être soustrait du signal dans la voie réception en vue de former un signal dans lequel le signal d'écho est annulé. Le critère utilisé pour le réglage des coefficients du filtre transversal est la minimisation d'une fonction prédéterminée (généralement la valeur quadratique moyenne) d'un signal d'erreur. Ce signal d'erreur doit être significatif du signal d'écho à la mise en service de l'annuleur d'écho ou du signal d'écho résiduel (différence entre le signal d'écho et le signal de copie d'écho) pendant la convergence de l'annuleur d'écho, ce signal d'écho ou d'écho résiduel étant présent dans le signal de sortie du circuit de différence.

Ce signal d'erreur à convertir en numérique pour le réglage des coefficients du filtre transversal, est constitué dans les annuleurs d'écho connus par le signal de sortie du circuit de différence. Or dans un tel signal d'erreur, le signal de données utile reçu se superpose au signal d'écho résiduel et son niveau relatif devient de plus en plus grand au cours de la convergence. Il peut en résulter un problème qui est lié au convertisseur convertissant en numérique le signal d'erreur et qui peut donner lieu à un arrêt de la convergence de l'annuleur d'écho pour un signal d'écho résiduel relativement élevé.

Ce problème se pose lorsque, pour convertir le signal d'erreur en numérique, on désire utiliser un convertisseur analogique-numérique à précision réduite en vue d'en réduire le coût. Si l'on utilise le convertisseur le plus simple consistant en un simple détecteur du signe du signal d'erreur et fournissant donc un signal numérique à un bit, il se peut qu'aux instants d'échantillonnage du signal d'erreur, le signal utile reçu ait une amplitude dans élevée que le signal d'écho résiduel de sorte qu'à ces instants le signe du signal d'erreur n'est pas représentatif du signal d'écho résiduel. Ce défaut a une conséquence particulièrement grave dans les systèmes de transmission de données homochrones, dans lesquels l'échantillonnage du signal d'erreur est effectué à l'aide d'une horloge locale synchrone des données reçues. Dans ces systèmes homochrones, l'échantillonnage du signal d'erreur peut se faire en permanence à des instants où le signal utile reçu a une valeur élevée. Dans ce cas, la convergence de l'annuleur d'écho peut éventuellement commencer si, aux instants l'échantillonnage, le signal d'écho a une amplitude plus élevée que le signal utile reçu, mais cette convergence s'arrête quand, à ces instants l'échantillonnage, le signal d'écho résiduel atteint sensiblement le niveau élevé du signal utile reçu.

Pour pallier ce défaut, en conservant la simplicité d'un convertisseur à un bit, une solution préconisée dans la demande de brevet français publiée n° 80 05 321, consiste à combiner avec le signal de sortie du circuit de différence un signal auxiliaire périodique de fréquence plus élevée que la fréquence 1/T des données, ayant sensiblement le même niveau et complètement décorrélé avec le signal utile de données reçu. En utilisant le signe du signal de combinaison ainsi formé, pour constituer le signal numérique à un bit servant au réglage des coefficients, on peut obtenir la convergence de l'annuleur d'écho dans un système homochrone.

2

Une autre solution décrite dans la demande de brevet français publiée n° 80 20 251 consiste à faire une estimation du niveau du signal utile reçu et à comparer aux instants d'échantillonnage le signal de sortie du circuit de différence à deux seuils positif et négatif dépendant de ce niveau, l'erreur étant considérée comme nulle quand ledit signal de sortie se trouve entre ces niveaux, et comme positive ou négative selon que ledit signal de sortie est plus élevé en valeur absolue que le seuil positif ou le seuil négatif. Avec cette solution le signal numérique représentatif du signal d'erreur et servant au réglage des coefficients est formé de deux bits et l'annuleur d'écho peut converger jusqu'à une valeur très réduite du signal d'écho résiduel.

La présente invention fournit une autre solution particulièrement simple du même problème, en utilisant pour le réglage des coefficients un signal d'erreur qui est formé de façon tout à fait différente, évitant l'emploi d'un signal auxiliaire et permettant la convergence en n'utilisant que du signe de ce signal d'erreur.

Conformément à l'invention, dans un annuleur d'écho en bande de base comprenant au moins un filtre transversal, à coefficients réglables, le signal d'erreur utilisé pour modifier les coefficients de chaque filtre transversal est déterminé à un présent instant d'échantillonnage en formant la différence entre la valeur du signal de sortie dudit circuit de différence à cet instant d'échantillonnage et la valeur du signal de sortie du circuit de différence à un instant d'échantillonnage antérieur, préalablement multipliée par le rapport de la valeur du signal de données restitué au présent instant d'échantillonnage à la valeur du signal de données restitué à l'instant d'échantillonnage antérieur, la modification des coefficients étant effectuée ou non selon que les deuxdites valeurs du signal de données restitué sont différentes de zéro ou au moins l'une de ces deux valeurs est égale à zéro.

L'annuleur d'écho de l'invention permet d'annuler un signal d'écho se superposant à un signal de données reçu, que ce signal de données reçu résulte du côté émission d'un signal de données multiniveaux, d'un signal de données à deux niveaux ou d'un signal de données à trois niveaux résultant du codage pseudoternaire de données à deux niveaux.

Dans le cas de données émises à deux niveaux ou de données à trois niveaux résultant d'un codage pseudoternaire, le circuit de décision peut restituer un signal de données à deux niveaux positif et négatif et le signal d'erreur e(n) pour chaque filtre transversal peut être formé comme la différence ou la somme des valeurs du signal de sortie du circuit de différence au présent instant d'échantillonnage du filtre et à un instant d'échantillonnage antérieur selon les valeurs du signal de données restitué au présent instant d'échantillonnage et à l'instant d'échantillonnage antérieur ont le même signe ou des signes différents.

On obtient un mode de réalisation particulièrement simple de l'annuleur d'écho de l'invention en utilisant pour le réglage des coefficients de chaque filtre transversal le signal Sgn[e(n)] caractérisant le signe du signal d'erreur e(n), formé par exemple comme on vient de l'indiquer dans le cas de données à deux niveaux ou de données pseudoternaires.

L'utilisation du signal d'erreur e(n) formé conformément à l'invention convient lorsque le signal d'écho a approximativement un niveau plus faible que le signal utile de données reçu. Lorsque le signal d'écho risque d'avoir un niveau plus élevé que le signal utile reçu, ce qui se produit par exemple dans le cas d'une ligne de transmission longue, il est avantageux d'utiliser pour le réglage des coefficients de chaque filtre transversal un signal E(n) ayant une valeur nulle quand le signe du signal d'erreur caractérisé par Sgn[e(n)] et le signe du signal de sortie du circuit de différence sont différents et une valeur égale à + 1 ou − 1 quand ces deux signes sont en même temps positifs ou négatifs. De cette manière, dans une étape initiale de la convergence de l'annuleur d'écho, le signal d'écho est réduit sensiblement au niveau du signal utile reçu à l'aide du signal constitué par le signe du signal de sortie du circuit de différence tandis que dans l'étape finale le signal d'écho résiduel est réduit jusqu'à une valeur quasiment nulle à l'aide du signal Sgn[e(n)] formé conformément à l'invention.

La description suivante en regard des dessins annexés, le tout donné à titre d'exemple, fera bien comprendre comment l'invention peut être réalisée.

La figure 1 représente la structure d'un annuleur d'écho à un filtre transversal, incorporé dans un modem de transmission de données et auquel s'applique l'invention.

La figure 2 représente le schéma du circuit de réglage d'un coefficient d'un filtre transversal de l'annuleur d'écho.

La figure 3 représente le schéma de principe de l'annuleur d'écho conforme à l'invention.

La figure 4 représente le schéma d'un mode de réalisation du circuit calculant le signal Sgn[e(n)] caractérisant le signe du signal d'erreur e(n), dans le cas d'un signal de données restitué à deux niveaux.

La figure 5 représente des diagrammes de signaux destinés à expliquer le fonctionnement du circuit de la figure 4.

La figure 6 représente le schéma d'un mode de réalisation d'un circuit de calcul du signal E(n), dans le cas d'un signal de données restitué à deux niveaux.

La figure 7 représente la structure d'un annuleur d'écho formé de plusieurs filtres transversaux et auquel s'applique l'invention.

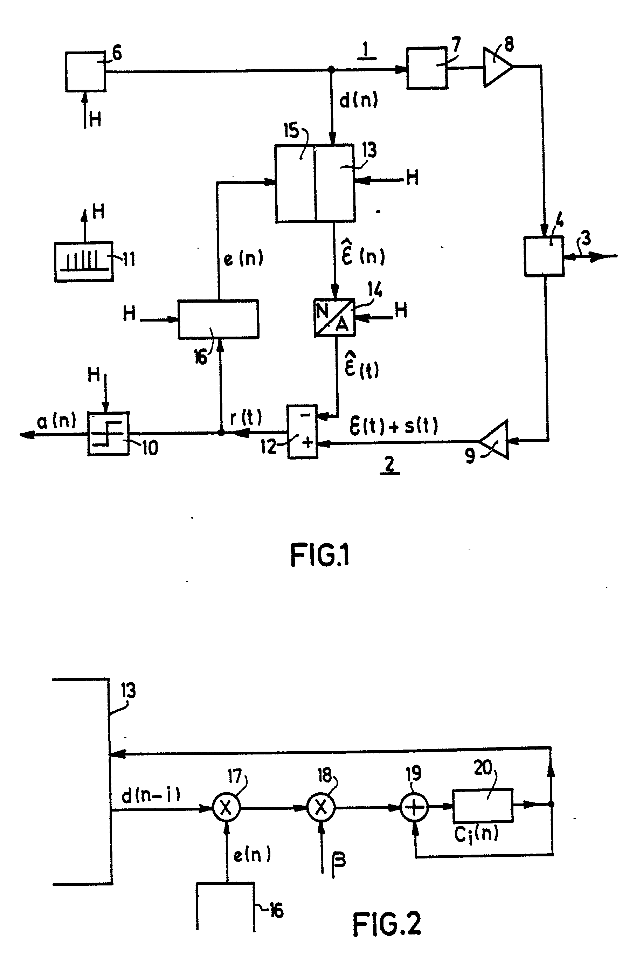

La figure 1 montre la structure d'un annuleur d'écho incorporé dans un modem de transmission de données en bande de base et auquel s'applique l'invention. Ce modem comporte une voie unidirectionnelle d'émission 1 et une voie unidirectionnelle de réception 2, qui sont couplées à une ligne de transmission bidirectionnelle 3 par l'intermédiaire du circuit de couplage 4.

3

# 0 107 233

La voie d'émission *1* est connectée à une source de données 6 qui fournit des données à une fréquence 1/T. Ces données peuvent être à deux niveaux ou du type multiniveaux (c'est-à-dire à plus de deux niveaux). Dans l'exemple représenté, les données de la source 6 sont appliquées à un codeur linéaire 7 qui fournit un signal codé ayant un spectre convenant mieux à la transmission que le signal de données initial. Dans le cas d'un signal de données initial à deux niveaux, on peut effectuer par exemple un codage biphase, avec un signal codé restant à deux niveaux; on peut aussi effectuer un codage dit pseudoternaire, avec un signal codé ayant trois niveaux possibles dont le niveau zéro. Le signal de données codé est amplifié dans l'amplificateur d'émission 8 avant d'être appliqué à l'accès émission du circuit de couplage 4. Le signal de données ainsi traité dans la voie d'emission *1* est transmis vers le modem distant non représenté, via la ligne de transmission 3.

Le signal de données émis de la même manière par le modem distant est reçu dans le modem local représenté sur la figure, et il est dirigé par le circuit de couplage 4, vers l'entrée de la voie réception *2* de ce modem. Dans cette voie réception, le signal reçu est d'abord amplifié dans l'amplificateur de réception 9, pour être dirigé vers le circuit de décision 10 dans lequel le signal reçu est échantillonné et qui fournit un signal de données pouvant encore être traité dans d'autres parties non représentées du récepteur. Si les données fournies par la source de données de l'émetteur distant sont du type à deux niveaux ou du type multiniveaux et ne sont pas autrement codées, le circuit de décision 10 restitue le même signal de données lorsque l'annuleur d'écho a convergé. Si les données à deux niveaux fournies par la source de l'émetteur distant ont été codées en biphase, le circuit de décision 10 restitue ces données codées en biphase, avec deux niveaux. Si les données à deux niveaux de la source de l'émetteur distant ont été codées en pseudoternaire, le circuit de décision 10 restitue les données initiales à deux niveaux. Ainsi le circuit de décision 10 restitue toujours un signal de données à deux niveaux ou un signal multiniveaux.

Les impulsions d'échantillonnage utilisées dans le récepteur et notamment dans le circuit de décision 10 pour échantillonner le signal reçu sont fournies par un générateur d'horloge 11. Ce dernier engendre un signal d'horloge H de fréquence 1/T, qui est synchronisé par des moyens connus sur le signal de fréquence 1/T qui est utilisé dans le modem distant pour émettre les données. Dans le système de transmission homochrone envisagé sur la figure 1, le signal d'horloge H fourni par le générateur 11 ainsi synchronisé est aussi utilisé pour l'émission des données par la source de données 6 du modem local.

Quand un signal de données provenant de la voie émission *1* du modem local est appliqué à l'acces émission du circuit de couplage 4, il apparaît à la sortie de l'amplificateur 9 de la voie réception un signal d'écho $\varepsilon(t)$ dû à des imperfections inévitables de l'équilibrage du circuit de couplage et/ou à des discontinuités d'impédances dans la ligne de transmission 3 qui provoquent des réflexions de signaux. Ce signal d'écho parasite $\varepsilon(t)$ se superpose à la sortie de l'amplificateur 9 au signal de données utile $s(t)$ provenant du modem distant et peut empêcher la restitution correcte des données dans le récepteur.

L'annuleur d'écho chargé de supprimer ce signal d'écho $\varepsilon(t)$ comprend un circuit de différence 12 qui reçoit sur sa borne (+) le signal $\varepsilon(t) + s(t)$ apparaissant dans la voie réception et sur sa borne (−) un signal de copie d'écho $\hat{\varepsilon}(t)$ de façon à former un signal de différence $r(t)$ tel que:

$$r(t) = s(t) + [\varepsilon(t) - \hat{\varepsilon}(t)] \tag{1}$$

La partie $[\varepsilon(t) - \hat{\varepsilon}(t)]$ de ce signal de différence est le signal d'écho résiduel qui est pratiquement nul lorsque la convergence de l'annuleur d'écho est réalisée.

Pour obtenir ce résultat, l'annuleur d'écho comprend un dispositif de traitement numérique réglable 13 qui reçoit le signal fourni par la source de données 6 et qui doit être réglé pour fournir à des instants d'échantillonnage un signal de copie d'écho permettant l'annulation du signal d'écho dans le signal de différence $r(t)$. Sur la figure 1, on envisage un dispositif de traitement constitué par un seul filtre transversal numérique 13 fonctionnant à des instants d'échantillonnage ayant la fréquence 1/T des données fournies par la source de données 6. Ce filtre 13 fournit à ces instants nT caractérisés par le nombre entier n, le signal numérique de copie d'écho $\hat{\varepsilon}(n)$. On peut noter dès maintenant qu'un tel filtre transversal fonctionnant à la fréquence 1/T des données est le circuit de base qui est utilisé dans un dispositif de traitement travaillant à une fréquence d'échantillonnage $F_e$ multiple de la fréquence 1/T des données.

On appelle $d(n)$ les échantillons des données appliquées aux instants n à l'entrée du filtre transversal 13. Ce filtre transversal est agencé de façon usuelle pour stocker à chaque instant n, N échantillons $d(n{-}i)$ appliqués à son entrée (i entier allant de 0 à N—1), et pour calculer les échantillons du signal de copie d'écho $\hat{\varepsilon}(n)$ selon l'expression:

$$\hat{\varepsilon}(n) = \sum_{i=0}^{N-1} C_i \cdot d(n - i) \tag{2}$$

$C_i$ représentant les coefficients du filtre.

Le signal numérique de copie d'écho ainsi calculé est appliqué au convertisseur numérique-analogique 14 qui fournit le signal analogique $\hat{\varepsilon}(t)$ appliqué à l'entrée (−) du circuit de différence 12.

4

Les coefficients $C_i$ du filtre transversal 13 sont réglables et réglés dans le circuit de réglage 15 de façon à minimiser une fonction prédéterminée d'un signal d'erreur e(n) qui est élaboré sous forme numérique, aux instants n, dans le circuit de calcul 16 et qui doit être significatif du signal d'écho, ou du signal d'écho résiduel présent dans le signal de différence r(t). On expliquera par la suite le mode de calcul de ce signal d'erreur e(n). Généralement les coefficients $C_i$ du filtre 13 sont réglés de façon à minimiser la valeur quadratique moyenne du signal d'erreur e(n) soit $E[|e(n)|]^2$. Dans ce cas, en utilisant l'algorithme du gradient, les coefficients $C_i$ sont réglés par récurrences successives suivant la formule de récurrence:

$$C_i(n + 1) = C_i(n) + \alpha.E[d(n{-}i).e(n)] \tag{3}$$

$\alpha$ étant un coefficient inférieur à 1.

Dans la pratique, pour éviter d'avoir à calculer une valeur moyenne, opération indiquée par l'opérateur E, on utilise plutôt la formule de récurrence:

$$C_i(n + 1) = C_i(n) + \beta.d(n{-}i).e(n) \tag{4}$$

Dans cette formule $\beta$ est un coefficient fixe de valeur faible par rapport à 1, qui conditionne la grandeur des modifications à apporter aux coefficients $C_i(n)$ à la récurrence n, pour obtenir les coefficients $C_i(n + 1)$ à la récurrence (n + 1).

La minimisation de la quantité $E[|e(n)|]^2$ à l'aide des formules de récurrence (3) ou (4) doit permettre d'obtenir la convergence des N coefficients $C_i$ du filtre transversal, vers les N échantillons $g_i$ de la réponse impulsionnelle du trajet du signal d'écho, pris de l'instant de référence i = 0 à l'instant N—1. Pour les instants tels que $i \geqslant N$, les échantillons $g_i$ sont supposés nuls. Les échantillons $\varepsilon(n)$, aux instants n, du signal d'écho ont l'expression:

$$\epsilon(n) = \sum_{i=0}^{N-1} g_i . d(n - i) \tag{5}$$

En rapprochant les formules (2) et (5), on voit que lorsque les coefficients $C_i$ du filtre transversal ont convergé vers les échantillons $g_i$ de la réponse impulsionnelle, le signal d'écho résiduel $\varepsilon(n){-}\hat{\varepsilon}(n)$ aux instants d'échantillonnage n s'annule, et à ces instants le signal de différence r(n) ne contient plus que le signal utile s(n).

La formule pratique de récurrence (4) peut être mise en oeuvre dans le circuit de réglage 15, selon un schéma représenté sur la figure 2 pour un coefficient $C_i$. Le signal de donnée d(n—i) disponible dans une case mémoire du filtre transversal 13 est appliqué à un circuit multiplicateur 17 pour être multiplié par le signal d'erreur e(n) élaboré dans le circuit de calcul d'erreur 16. Le produit ainsi formé est appliqué au circuit multiplicateur 18 pour être multiplié par le coefficient fixe $\beta$. Le terme de modification $\beta.d(n{-}i).e(n)$ ainsi formé est appliqué à un accumulateur formé par le circuit additionneur 19 et la mémoire 20 procurant un retard d'une période d'échantillonnage T. Le circuit additionneur forme la somme du terme de modification calculé à l'instant n et du coefficient $C_i(n)$ apparaissant à l'instant n à la sortie de la mémoire 20. Cette somme disponible à l'instant n + 1 à la sortie de la mémoire 20 constitue le coefficient $C_i(n + 1)$ à utiliser à l'instant n + 1 dans le filtre transversal 13.

Il est connu aussi d'utiliser pour le réglage des coefficients $C_i$, une formule de récurrence plus simple à mettre en oeuvre que la formule (4), en y remplaçant le signal d'erreur e(n) par son signe qui peut s'écrire Sgn[e(n)]. La formule de récurrence (4) devient alors:

$$C_i(n + 1) = C_i(n) + \beta.d(n{-}i).Sgn[e(n)] \tag{6}$$

Dans les annuleurs d'écho connus, le signal d'erreur e(n) utilisé pour le réglage des coefficients $C_i$ du filtre transversal 13 est formé dans le circuit de calcul 16, par les échantillons r(n) convertis en numérique du signal analogique r(t) fourni par le circuit de différence 12. Pour des modems de transmission en bande de base transmettant par exemple à 80 kbits/S, la cadence de conversion pour former en numérique le signal d'erreur e(n) peut être élevée et pour réduire le coût de cette conversion, on essaie de n'utiliser qu'un convertisseur à un bit donnant le signe des échantillons r(n) du signal de différence r(t). Pour la modification des coefficients, on applique alors la formule de récurrence (6) en remplaçant e(n) par r(n).

Mais, cette méthode présente un défaut qui, dans certains cas, peut arrêter la convergence de l'annuleur d'écho pour une valeur élevée et inacceptable du signal d'écho résiduel. En effet, aux instants d'échantillonnage n, le signal de différence s'écrit d'après la formule (1):

$$r(n) = s(n) + [\varepsilon(n) - \hat{\varepsilon}(n)]$$

Aux instants n le signe du signal de différence r(n) est sensiblement déterminé par le plus grand de deux signaux S(n) et $[\varepsilon(n) - \hat{\varepsilon}(n)]$.

5

0 107 233

Lorsque aux instants d'échantillonnage n le signal d'écho résiduel [ε(n) − ê(n)] est supérieur au signal utile reçu s(n), le signe de r(n) est significatif du signal d'écho résiduel et la modification des coefficients peut s'effecteur dans le sens correct pour diminuer le signal d'écho résiduel. Ceci peut se produire par exemple pour des lignes de transmission longues, à la mise en service de l'annuleur d'écho.

Lorsque aux instants d'échantillonnage n, le signal d'écho résiduel [ε(n) − ê(n)] est inférieur au signal utile reçu, le signe de r(n) n'est pas significatif du signal d'écho résiduel et la modification des coefficients ne tend pas forcément à diminuer le signal écho résiduel. Ceci peut se produire par exemple pour des lignes de transmission courtes, dès la mise en service de l'annuleur d'écho, ou pour des lignes de transmission longues, après un début de convergence de l'annuleur d'écho. Ce défaut est particulièrement grave dans les systèmes de transmission homochrones dans lesquels les horloges d'émission et de réception sont synchrones. Dans un tel système, les instants d'échantillonnage n peuvent se produire en permanence à des instants où l'amplitude du signal utile reçu s(n) est élevée et l'on peut se trouver, dès la mise en service de l'annuleur d'écho ou très rapidement au cours de la convergence, dans la situation où la convergence de l'annuleur d'écho cesse, avec un d'écho résiduel [ε(n) − ê(n)] ayant une amplitude de l'ordre de grandeur de l'amplitude élevée du signal utile reçu s(n).

Pour éviter l'influence du signal utile reçu sur la convergence de l'annuleur d'écho, la présente invention fournit une solution simple et complètement différente des solutions envisagées dans l'art antérieur.

Conformément à l'invention, le signal d'erreur e(n) utilisé pour la modification des coefficients du filtre transversal 13 à un présent instant d'échantillonnage n est déterminé dans le circuit de calcul d'erreur 16 en formant la différence entre la valeur r(n) à l'instant n du signal r(t) sortant du circuit de différence 12 et la valeur de ce signal r(t) à un instant d'échantillonnage antérieur à l'instant n, cette dernière valeur ayant été préalablement multipliée par le rapport de la valeur a(n) du signal de données restitué par le circuit de décision à l'instant n, à la valeur de ce signal de données restitué audit instant d'échantillonnage antérieur.

L'instant d'échantillonnage antérieur considéré peut être l'instant d'échantillonnage (n—1)T précédant juste l'instant nT et dans ce cas, le signal d'erreur e(n) utilisé pour le réglage des coefficients $g_i$ dans l'annuleur d'écho de l'invention peut s'exprimer par la formule:

$$e(n) = r(n) − r(n − 1) . \frac{a(n)}{a(n − 1)} \qquad (7)$$

Il est clair que dans cette formule, la multiplication de la valeur antérieur r(n − 1) du signal sortant du circuit 12 par le rapport

$$\frac{a(n)}{a(n − 1)}$$

a pour but de normaliser cette valeur antérieure par rapport à la présente valeur r(n), afin que la différence ait toujours la même signification, indépendante de la valeur du signal de données.

Lorsque le signal de données restitué par le circuit de décision 10 n'a pas de niveau zéro, les modifications des coefficients sont effectuées avec le signal d'erreur e(n): ceci se produit par exemple pour des données multiniveaux sans niveau zéro ou pour des données à deux niveaux ou pour des données codées en pseudoternaire. Lorsque le signal de données restitué par le circuit de décision 10 a un niveau zéro, les modifications des coefficients sont effectuées avec le signal d'erreur e(n) lorsque les deux valeurs du signal de données a(n) et a(n − 1) sont différentes de zéro et ne sont pas effectuées lorsqu'au moins l'une de ces deux valeurs est égale à zéro.

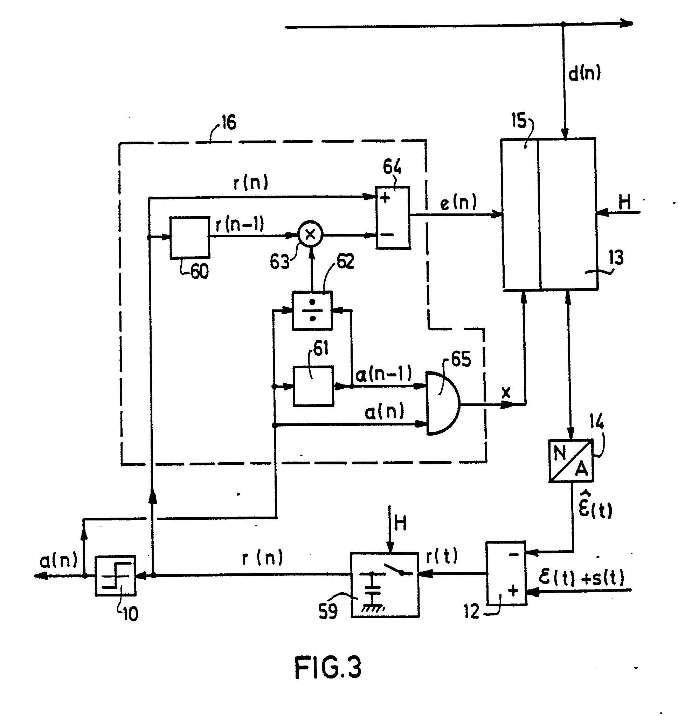

La mise en oeuvre de l'invention peut être réalisée dans le cas général comme l'indique le schéma d'annuleur d'écho de la figure 3. Sur cette figure 3, les éléments ayant la même fonction que sur la figure 1 sont munis des mêmes réréfences. Le signal r(t) fourni par le circuit de différence 12 est échantillonné par le circuit d'échantillonnage et de maintien 59 actionné par le signal H de fréquence 1/T. Ce signal échantillonné est appliqué à un circuit de retard 60 produisant un retard égal à une période d'échantillonnage T de sorte qu'à un instant d'échantillonnage n, on obtient à l'entrée et à la sortie de ce circuit 60, les valeurs r(n) et r(n − 1) du signal r(t) sortant du circuit de différence 12. Le signal de données restitué par le circuit de décision 10 est appliqué à un circuit de retard 61 produisant aussi un retard égal à une période T de sorte qu'à l'instant n, on obtient à l'entrée et à la sortie de ce circuit de retard 61, les valeurs a(n) et a(n − 1) du signal de données restitué. Le rapport

$$\frac{a(n)}{a(n − 1)}$$

6

est formé dans le circuit 62. Le circuit multiplicateur 63 forme le produit

$$r(n-1).\frac{a(n)}{a(n-1)}$$

qui est appliqué à l'entrée (−) du circuit de différence 64. Ce circuit de différence 64 reçoit sur son entrée (+) la quantité r(n) et fournit aussi, conformément à la formule (7), le signal d'erreur e(n) qui est appliqué au circuit de réglage 15 des coefficients du filtre transversal 13. Par ailleurs une porte ET 65 a ses deux entrées connectées respectivement à l'entrée et à la sortie du circuit de retard 61. La porte ET 65 fournit un signal logique x qui autorise la modification des coefficients par le signal d'erreur e(n) lorsque les deux valeurs a(n) et a(n − 1) du signal de données restitué, sont différents de zéro et n'autorise pas cette modification lorsqu'au moins l'une de ces valeurs a(n) et a(n − 1) est égale à zéro. L'action du signal logique x peut être par exemple d'annuler le terme de modification des coefficients appliqué au circuit additionneur 19 (voir figure 2), lorsque la modification n'est pas autorisée.

Dans le cas où le signal de données émis par le modem distant a deux niveaux ou trois niveaux résultant d'un codage pseudoternaire de données à deux niveaux, le circuit de décision 10 restitue des données à deux niveaux positif et négatif, sous la forme du signe du signal r(t) échantillonné. Dans ce cas le signal d'erreur e(n) de la formule (7) peut se mettre sous la forme:

$$e(n) = r(n) - r(n-1).Sgn[r(n)].Sgn[r(n-1)] \qquad (8)$$

On en déduit que l'on peut alors baser le calcul du signal d'erreur e(n) sur les relations:

$$(9) \quad \begin{cases} e(n) = r(n) - r(n-1) & \text{si } PS(n) > 0 \\ e(n) = r(n) + r(n-1) & \text{si } PS(n) < 0 \end{cases}$$

$$\text{avec } PS(n) = Sgn\Big[r(n)\Big].Sgn\Big[r(n-1)\Big]$$

On va maintenant montrer que si les coefficients $C_i$ du filtre transversal 13 sont réglés selon les formules de récurrences (3) ou (4) de façon à minimiser la valeur quadratique moyenne du signal d'erreur e(n) formé conformément à l'invention, ces coefficients $C_i$ peuvent converger dans des conditions que l'on précisera, vers les échantillons $g_i$ de la réponse impulsionnelle du trajet d'écho, ce qui signifie l'annulation du signal d'écho. Pour simplifier, on se placera pour cette démonstration dans le cas où les données restituées par le circuit de décision 10 ont deux niveaux + 1 ou − 1 fournis par le signe du signal r(t) échantillonné et où donc le signal d'erreur peut s'exprimer par la formule (8).

En appelant $r_e(n)$ et $r_e(n-1)$ le signal d'écho résiduel aux instants n et n − 1, on déduit de la formule (1) que:

$$(10) \quad \begin{cases} r(n) = s(n) + r_e(n) \\ r(n-1) = s(n-1) + r_e(n-1) \end{cases}$$

$$\text{Avec} \quad \begin{cases} r_e(n) = \epsilon(n) - \hat{\epsilon}(n) \\ r_e(n-1) = \epsilon(n-1) - \hat{\epsilon}(n-1) \end{cases}$$

On suppose maintenant qu'aux instants d'échantillonnage le signal utile reçu s(t) a une amplitude plus élevée que le signal d'écho résiduel, c'est-à-dire que l'on a:

$$\begin{cases} s(n) > r_e(n) \\ s(n-1) > r_e(n-1) \end{cases} \qquad (11)$$

Ceci est réalisé par exemple dès la mise en service de l'annuleur d'écho pour des lignes de transmission courtes.

Si les conditions (11) sont réalisées on peut écrire:

$$\begin{cases} Sgn\Big[r(n)\Big] = Sgn\Big[s(n)\Big] \\ Sgn\Big[r(n-1)\Big] = Sgn\Big[s(n-1)\Big] \end{cases} \qquad (12)$$

On peut alors montrer en tenant compte des relations (10) et (12) que l'expression (9) du signal d'erreur e(n) peut s'écrire:

$$e(n) = [|s(n)| - |s(n-1)|].Sgn[s(n)] + r_e(n) - r_e(n-1).Sgn[s(n)].Sgn[s(n-1)] \qquad (13)$$

On suppose maintenant que le signal utile reçu s(t) a la même amplitude aux instants d'échantillonnage n et n − 1, c'est-à-dire que l'on a:

$$|s(n)| = |s(n-1)| \qquad (14)$$

Ceci est pratiquement réalisé, par exemple pour des lignes de transmission courtes ou pour des lignes de transmission égalisées.

On en déduit finalement que si la condition (14) est réalisée, le signal d'erreur selon la formule (13) peut s'écrire:

$$e(n) = r_e(n) - r_e(n-1).Sgn[s(n)].Sgn[s(n-1)] \qquad (15)$$

Cette formule (15) montre que, avec les hypothèses faites, se traduisant par les conditions (11) et (14), le signal d'erreur e(n) dépend du signal d'écho résiduel et ne dépend plus de l'amplitude du signal utile reçu, mais seulement du signe de ce signal aux instants d'échantillonnage n et n − 1.

On va maintenant démontrer la convergence de l'annuleur d'écho de l'invention, utilisant pour le réglage des coefficients $C_i$ du filtre transversal le signal d'erreur e(n) selon la formule (15).

On déduit aisément des formules (2) et (5), les expressions du signal d'écho résiduel $r_e(n)$ et $r_e(n-1)$ aux instants n et n − 1:

$$\left\{ \begin{array}{l} r_e(n) = \displaystyle\sum_{i=0}^{N-1} (g - C_i).d(n-i) \\[3em] r_e(n-1) = \displaystyle\sum_{i=0}^{N-1} (g_i - C_i).d(n-1) \end{array} \right. \qquad (16)$$

Pour simplifier l'écriture, on va utiliser la notation vectorielle, en posant respectivement pour les transposées de vecteurs $\vec{g}$, $\vec{C}(n)$, $\vec{D}(n)$ et $\vec{D}(n-1)$:

$\underset{\rightarrow}{g} = [g_0, g_1 \ldots g_{N-1}]$
$\vec{C}(n) = [C_0(n), C_1(n), \ldots C_{N-1}(n)]$
$\vec{D}(n) = d(n-1), \ldots d(n-N+1)]$
$\vec{D}(n-1) = [d(n-1), d(n-2), \ldots d(n-N)]$

En tenant compte des formules (16), le signal d'erreur e(n) selon la formule (15) peut s'écrire en notation vectorielle:

$$e(n) = \underset{\rightarrow}{D}(n)[\vec{g} - \vec{C}(n)] - \underset{\rightarrow}{D}(n-1)[\vec{g} - \vec{C}(n)].Sgn[s(n)].Sgn[s(n-1)] \qquad (17)$$

Par ailleurs la formule de récurrence (3) utilisée pour le réglage des coefficients, s'écrit en notation vectorielle:

$$\vec{C}(n+1) = \vec{C}(n) + \alpha E[\vec{D}(n).e(n)] \qquad (18)$$

En utilisant l'expression (17) de e(n), on obtient pour la valeur moyenne $E[\vec{D}(n).e(n)]$ intervenant dans la formule (18):

$$E[\vec{D}(n).e(n)] = [\vec{g} - \vec{C}(n)].E[\vec{D}(n).\underset{\rightarrow}{D}(n)] - [\vec{g} - \vec{C}(n)].E[\vec{D}(n).\underset{\rightarrow}{D}(n-1).Sgn[s(n)].Sgn[s(n-1)]]$$

Dans cette expression de $E[\vec{D}(n).e(n)]$, le deuxième terme est égal à zéro. En effet les données émises localement, formant les composantes de la matrice $\vec{D}(n).\underset{\rightarrow}{D}(n-1)$ sont statistiquement indépendantes des données reçues s(n) et s(n − 1) de sorte que toutes ces composantes, multipliées par Sgn[s(n)].Sgn[s(n − 1)] ont une valeur moyenne nulle. Les données émises localement étant elles-mêmes

8

statiquement indépendantes, on peut montrer que la matrice $E[\overrightarrow{D}(n).\underline{D}(n)]$ peut se mettre sous la forme $\| \sigma^2 \|$, $\|$ étant la matrice identité et $\sigma^2$ un facteur caractérisant la puissance des données. Dans ces conditions, la formule de récurrence (18) peut s'écrire:

$$\overrightarrow{C}(n + 1) = \overrightarrow{C}(n) + \alpha[\overrightarrow{g} - \overrightarrow{C}(n)]\sigma^2$$

La forme classique de cette formule de récurrence permet d'écrire lorsque n tend vers l'infini:

$$\overrightarrow{C}(n) = [1 - \alpha\sigma^2]^n + \overrightarrow{g}$$

Avec un coefficient $\alpha$ choisi assez faible pour que $\alpha\sigma^2 < 1$, on obtient pratiquement $\overrightarrow{C}(n) = \overrightarrow{g}$ pour un nombre de récurrences n suffisamment grand, ce qui démontre la convergence de l'annuleur d'écho.

Lorsque les conditions (11) et (14) sont respectées, au lieu d'utiliser pour le réglage des coefficients du filtre transversal le signal d'erreur e(n) formé dans le cas général à l'aide de la formule (7) ou formé dans le cas de données restituées à deux niveaux à l'aide des formules (8) ou (9), on peut utiliser le signe de ce signal d'erreur, soit Sgn[e(n)].

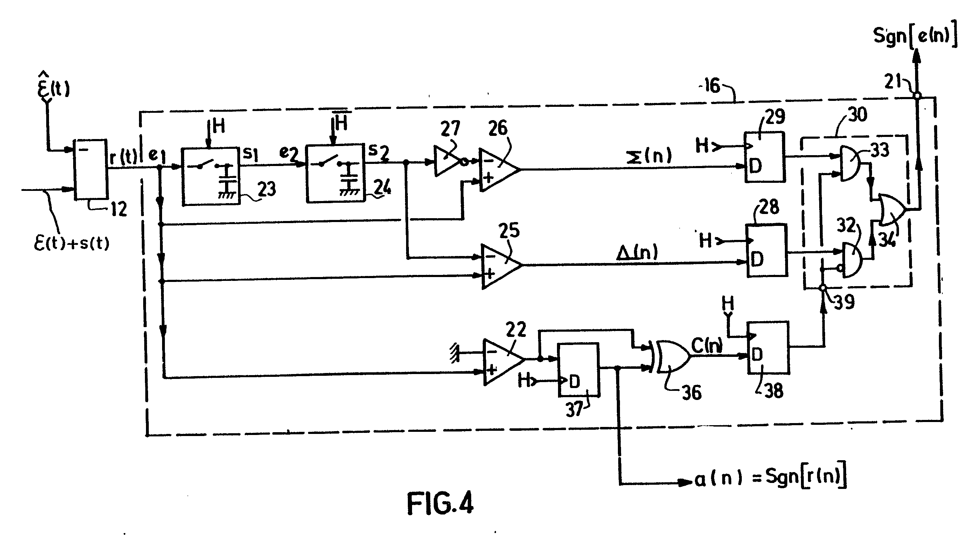

La figure 4 montre un mode de réalisation particulier du circuit de calcul 16 formant le signal Sgn[e(n)], dans le cas où le signal de données restitué par le circuit de décision a deux niveaux positif et négatif, constitués par le signe du signal r(t). L'élaboration des quantités Sgn[e(n)] dans ce circuit 16 est basée sur les relations suivantes, directement déduites des relations (9):

(19)
$$\begin{cases} \text{Sgn}\big[e(n)\big] = \text{Sgn}\big[r(n) - r(n-1)\big] & \text{si PS}(n) > 0 \\ \text{Sgn}\big[e(n)\big] = \text{Sgn}\big[r(n) + r(n-1)\big] & \text{si PS}(n) < 0 \end{cases}$$

avec
$$\text{Ps}(n) = \text{Sgn}\big[r(n)\big] . \text{Sgn}\big[r(n-1)\big]$$

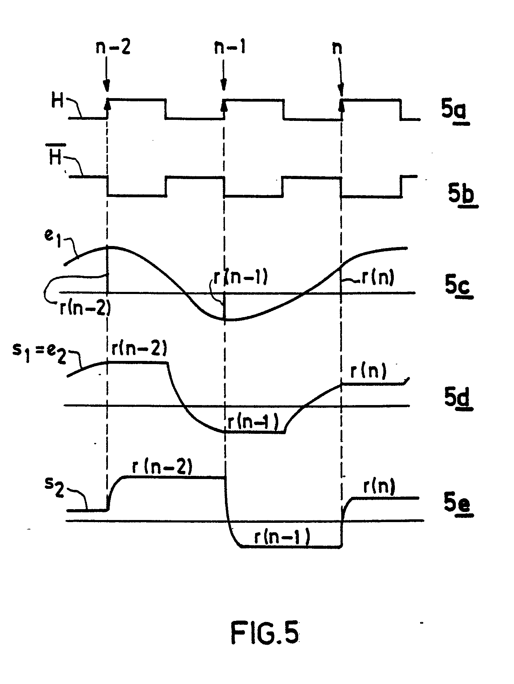

Sur la figure 4, les éléments ayant les mêmes fonctions que sur la figure 1, sont munis des mêmes références. On voit sur la figure 4, le circuit de différence 12 recevant sur sa borne (+) le signal de la voie réception $\varepsilon(t) + s(t)$ et sur sa borne (−) le signal de copie d'écho converti en analogique $\hat{e}(t)$. Le signal de différence r(t) fourni par le circuit 12, est traité dans le circuit de calcul 16, dans lequel il est notamment appliqué au montage en cascade de deux circuits d'échantillonnage et de maintien 23 et 24. Le premier circuit 23 est actionné par le signal d'horloge H ayant la fréquence 1/T et le deuxième circuit 24 est actionné par le signal complémentaire $\overline{H}$. Le fonctionnement de ce montage 23, 24 est expliqué à l'aide de la figure 5. Le diagramme 5a représente le signal d'horloge H avec des fronts montants se produisant aux instants n − 2, n − 1 et n. Le diagramme 5b représente le signal $\overline{H}$. Le diagramme 5c représente le signal de différence analogique r(t) qui est appliqué à l'entrée $e_1$ du circuit 23 et qui a les valeurs r(n − 2), r(n − 1), r(n) aux instants n − 2, n − 1, n. On suppose que les circuits d'échantillonnage 23 et 24 sont passants quand leurs signaux de commande H et $\overline{H}$ sont à l'état bas et bloqués quand ces signaux sont à l'état haut. On en déduit l'allure du signal à la sortie $s_1$ du circuit 23 (c'est-à-dire à l'entrée $e_2$ du circuit 24), telle qu'elle est représentée sur le diagramme 5d. Enfin, l'allure du signal à la sortie $s_2$ du circuit 24, représentée sur le diagramme 5e, se déduit du diagramme 5d, en tenant compte d'un certain temps d'établissement du signal, lorsque le circuit 24 devient passant. Les diagrammes de la figure 5 montrent clairement que juste avant un front montant de l'horloge H, par exemple celui qui se produit à l'instant n, le signal à l'entrée $e_1$ du circuit 23 a la valeur r(n) et le signal à la sortie $s_2$ du circuit 24 a la valeur r(n − 1).

Dans le circuit 16, le signal de différence r(t) est appliqué à l'entrée (+) des deux circuits comparateurs 25 et 26. Le signal obtenu à la sortie du circuit 24 est appliqué directement à l'entrée (−) du circuit comparateur 25 et, via un amplificateur inverseur 27, à l'entrée (−) du circuit comparateur 26.

De cette manière, à la sortie du comparateur 25, on obtient juste avant le front montant de l'horloge H à l'instant n, un signal logique $\Delta(n)$ ayant la valeur:
$\Delta(n) = 1$ si r(n) − r(n − 1) > 0 et
$\Delta(n) = 0$ si r(n) − r(n − 1) < 0
A la sortie du comparateur 26, on obtient au même instant un signal logique $\Sigma(n)$ ayant la valeur:
$\Sigma(n) = 1$ si r(n) + r(n + 1) > 0
$\Sigma(n) = 0$ si r(n) + r(n + 1) < 0
Si les valeurs logiques 1 et 0 représentent respectivement les signes + et −, les signaux $\Delta(n)$ et $\Sigma(n)$ représentent bien les quantités Sgn[r(n) − r(n − 1)] et Sgn[r(n) + r(n − 1)] nécessaires selon les formules (19) pour obtenir la quantité Sgn[e(n)].

Les signaux $\Delta(n)$ et $\Sigma(n)$ ainsi formés sont appliqués à l'entrée D des bascules 28 et 29, pour être échantillonnés sur les fronts montants du signal d'horloge H. Les signaux $\Delta(n)$ et $\Sigma(n)$ échantillonnés sont appliqués au dispositif d'aiguillage 30 qui est chargé, en application des formules (19), de diriger vers la sortie 21 du circuit de calcul 16 soit le signal $\Delta(n)$, soit le signal $\Sigma(n)$ selon que la quantité PS(n) est positive ou négative. Le dispositif d'aiguillage 30 est formé de façon usuelle à l'aide de la porte ET 32 munie d'une entrée inverseuse, de la porte ET 33 et de la porte OU 34 montées comme l'indique la figure. Il est commandé par un signal logique de commande apparaissant sur sa borne 39 et représentatif de la quantité PS(n). Ce signal de commande est formé de la façon suivante: le signal de différence r(t) est appliqué à l'entrée (+) du circuit comparateur 22 dont l'entrée (−) est au potentiel zéro de la masse. Le signal de sortie du circuit comparateur 22 représentant ainsi la quantité Sgn[r(t)], est appliqué simultanément à une première entrée du circuit OU Exclusif 36 et à l'entrée D de la bascule 37 pour être échantillonné aux fronts montants de l'horloge H. La sortie de la bascule 37 est connectée à la deuxième entrée du circuit OU Exclusif 36. A l'instant n d'un front montant de l'horloge H, la première entrée du circuit OU Exclusif 36 reçoit donc la quantité Sgn[r(n)] tandis que sa deuxième entrée reçoit la quantité Sgn[r(n − 1)] qui avait été emmagasinée dans la bascule 37 à l'instant précédent n − 1. On peut noter ici que le circuit comparateur 22 associé à la bascule 37, joue le rôle du circuit de décision référencé 10 sur les figures 1 et 3. La sortie de la bascule 37 peut être utilisée pour restituer le signal de données a(n) = Sgn[r(n)]. A la sortie du circuit OU Exclusif 36 on obtient ainsi un signal C(n) ayant la valeur 1 quand la quantité PS(n) = Sgn[r(n)].Sgn[r(n − 1)] est négative et la valeur 0 quand la quantité PS(n) est positive. Le signal C(n) est appliqué à l'entrée de la bascule 38 pour être échantillonné aux fronts montants de l'horloge H. La sortie de la bascule 38 fournit le signal de commande du dispositif d'aiguillage 30. On voit clairement, d'après le schéma de ce dispositif d'aiguillage, que selon que C(n) = 1 (c'est-à-dire PS(n) < 0) ou C(n) = 0 (c'est-à-dire PS(n) > 0), c'est le signal $\Sigma(n)$ ou le signal $\Delta(n)$ qui apparaît sur la borne 21 après l'instant n d'un front montant de l'horloge H. Ce signal apparaissant sur la borne 21 est représentatif du signal Sgn[e(n)] à utiliser dans le circuit de réglage 15 des coefficients du filtre transversal 13.

Comme on l'a montré ci-dessus, l'utilisation du signal d'erreur e(n) formé conformément à l'invention selon la formule (7) ou du signe Sgn[e(n)] de ce signal d'erreur permet la convergence de l'annuleur d'écho lorsque les conditions (11) et (14) sont vérifiées, ce qui est par exemple le cas, dès la mise en service de l'annuleur d'écho, pour des lignes de transmission courtes et bien égalisées. Par contre, on peut montrer que l'utilisation de ce signal d'erreur e(n) ou de son signe Sgn[e(n)] pour le réglage des coefficients ne permet pas d'obtenir une convergence conduisant à l'annulation de l'écho lorsque les conditions (11) et (14) ne sont pas vérifiées, ce qui est par exemple le cas pour des lignes de transmission longues ou mal égalisées.

Pour une ligne de transmission longue, le signal d'écho $\varepsilon(t)$ a, à la mise en service de l'annuleur d'écho, un niveau élevé vis à vis du niveau du signal utile reçu s(t). Or, comme on l'a expliqué, un annuleur d'écho connu, utilisant comme signal d'erreur le signe du signal de différence r(t), c'est-à-dire aux instants d'échantillonnage n les quantités Sgn[r(n)], peut permettre de réduire le signal d'écho initial de niveau élevé pour une ligne longue, jusqu'à un niveau de signal d'écho résiduel ayant l'ordre de grandeur du niveau du signal utile reçu. D'autre part, si la ligne de transmission longue est mal égalisée, l'amplitude du signal reçu s(t), aux instants d'échantillonnage est variable, même dans un système de transmission homochrone, ce qui contribue à une certaine réduction du niveau du signal d'écho résiduel avec un annuleur d'écho connu.

Puisque l'utilisation du signe du signal de différence r(t) permet d'amener un signal d'écho de niveau éléve, au niveau du signal utile reçu et puisque l'utilisation du signe du signal d'erreur e(n) déterminé conformément à l'invention permet d'amener un signal d'écho résiduel ayant sensiblement le niveau du signal utile reçu, à un niveau pratiquement nul, une variante de l'invention consiste donc à utiliser conjointement le signe du signal de différence r(t) et le signe du signal d'erreur e(n) pour former un signal E(n) utilisé comme un signal d'erreur pour le réglage des coefficients.

Selon cette variante, ce signal E(n) à 2 bits peut prendre 3 valeurs: les valeurs + 1 ou − 1 selon que les quantités Sgn[r(n)] et Sgn[e(n)] ont la même valeur égale à + 1 ou − 1 et la valeur 0 si les quantités Sgn[r(n)] et Sgn[e(n)] ont des valeurs différentes. Ce signal E(n) est utilisé pour modifier la valeur des coefficients $C_i$ du filtre transversal 13, selon une formule de récurrence analogue à la formule (4), soit:

$$C_i(n + 1) = C_i(n) + \beta.d(n − 1).E(n)$$

On voit donc que lorsque les quantités Sgn[r(n)] et Sgn[e(n)] ont la même valeur, les coefficients sont modifiés en correspondance avec cette valeur commune. Lorsque ces quantités ont des valeurs différentes, les coefficients ne sont pas modifiés.

Pratiquement, cette variante de l'invention utilisant un tel signal E(n) permet d'obtenir la convergence de l'annuleur d'écho pour des lignes de transmission égalisées ou non et de n'importe quelle longueur dans le cas difficile de systèmes de transmission homochrones. En effet, dans n'importe quel cas, l'une des quantités Sgn[r(n)] ou Sgn[e(n)] utilisée pour former le signal E(n), prend successivement les valeurs correctes permettant la modification des coefficients dans le sens de la convergence, tandis que l'autre quantité prend au moins de temps à autre les mêmes valeurs correctes.

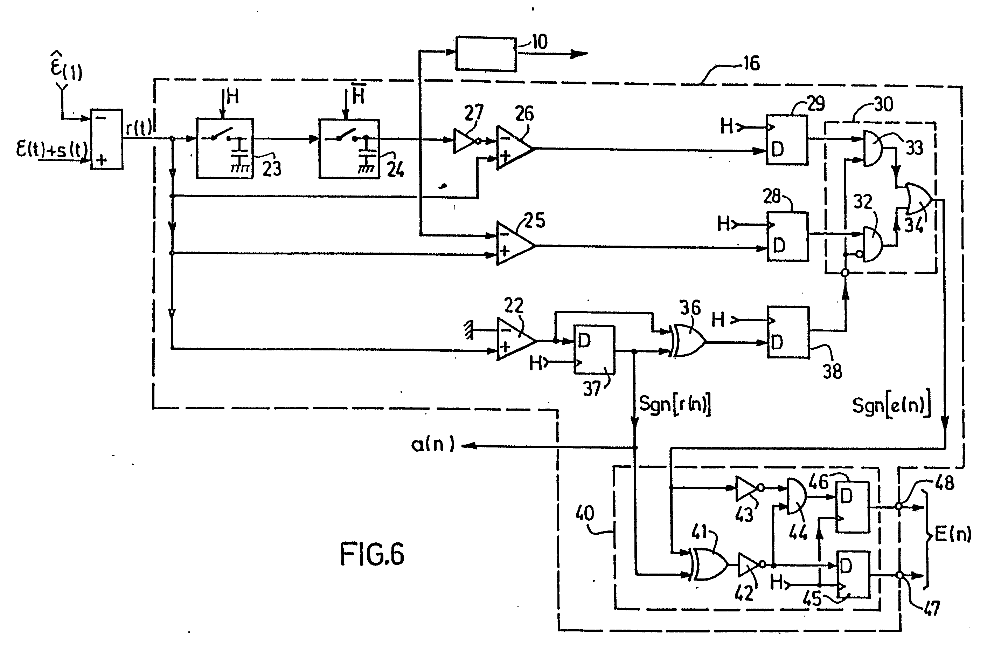

La figure 6 représente un mode de réalisation du circuit 16 calculant le signal E(n). Le circuit 16 de la figure 6 comporte tous les éléments du circuit 16 de la figure 4 portant les références 22 à 38 et montés de la même manière. Le circuit 16 comporte de plus le dispositif logique 40 utilisant le signal Sgn[r(n)] formé à la sortie de la bascule 37 et le signal Sgn[e(n)] formé à la sortie du circuit d'aiguillage 30. Le dispositif 40 est agencé pour former à partir des signaux logiques Sgn[e(n)] et Sgn[r(n)], le signal E(n) exprimé dans le code des compléments à deux, qui est le plus pratique pour effectuer les additions et soustractions nécessaires pour le réglage des coefficients. La fonction du dispositif logique 40 est décrite par la table de vérité du tableau I ci-dessous:

TABLEAU I

| $Sgn\left[e(n)\right]$ | $Sgn\left[r(n)\right]$ | E(n) | |
|:---:|:---:|:---:|:---:|
| | | LSB | MSBS |
| 1 | 1 | 1 | 0 |
| 1 | 0 | 0 | 0 |
| 0 | 1 | 0 | 0 |
| 0 | 0 | 1 | 1 |

Les deux premières colonnes du Tableau I indiquent ensemble les quatre configurations possibles pour l'ensemble des deux signaux Sgn[e(n)] et Sgn[r(n)]. Un signal logique "1" correspond à un signe (+) pour chacun de ces deux signaux et un signal logique "0" correspond à un signe (−). Les troisième et quatrième colonnes indiquent, en regard de ces quatre configurations, les valeurs de bits à obtenir pour former le signal E(n) dans le code des compléments à deux, en conformité avec la définitiion du signal E(n). La troisième colonne indiquée par LSB fournit le bit le moins significatif du signal E(n), la quatrième colonne indiquée par MSBS fournit les autres bits du signal E(n).

Il est aisé de vérifier que la table de vérité du Tableau I est réalisée avec le circuit 40 réalisé comme l'indique la figure 5. Les signaux Sgn[r(n)] et Sgn[e(n)] sont appliquées aux deux entrées du circuit OU Exclusif 41. Le signal de sortie du circuit 41 est appliqué au circuit inverseur 42 qui fournit le signal LSB correspondant au bit le moins significatif du signal E(n). Le signal Sgn[e(n)] est appliqué au circuit inverseur 43. Les signaux de sortie des circuits inverseurs 42 et 43 sont appliqués au circuit ET 44 qui fournit le signal MSBS correspondant aux autres bits du signal E(n). Les deux signaux LSB et MSBS sont appliqués à l'entrée D des deux bascules 45 et 46 pour être échantillonnés aux fronts montants de l'horloge H. Les sorties des bascules 45 et 46 sont reliées aux bornes de sortie 47 et 48 du circuit 16. Sur l'ensemble de ces deux bornes de sortie apparaît le signal E(n) exprimé dans le code des compléments à deux et destiné à être utilisé dans le circuit 15 de réglage des coefficients du filtre transversal 13.

On a supposé dans ce qui précède et notamment dans le schéma de base de la figure 1, que la fréquence d'échantillonnage dans l'annuleur d'écho, c'est-à-dire la fréquence à laquelle sont calculés les échantillons du signal de copie d'écho était égale à la fréquence 1/T du signal de données dans la voie émission. Dans cette hypothèse le dispositif de traitement numérique calculant le signal de copie d'écho est composé, comme le montre la figure 1, d'un filtre transversal fonctionnant à la fréquence 1/T des données. Mais généralement, le signal de données à émettre est codé (en biphase par exemple) et émis dans une bande de fréquence dont la fréquence maximale est supérieure à la fréquence 1/T des données; pour annuler dans la plus large bande possible l'écho engendré par ce signal émis, il est nécessaire que dans l'annuleur d'écho, le signal de copie d'écho soit fourni avec une fréquence d'échantillonnage largement supérieure à la fréquence 1/T des données.

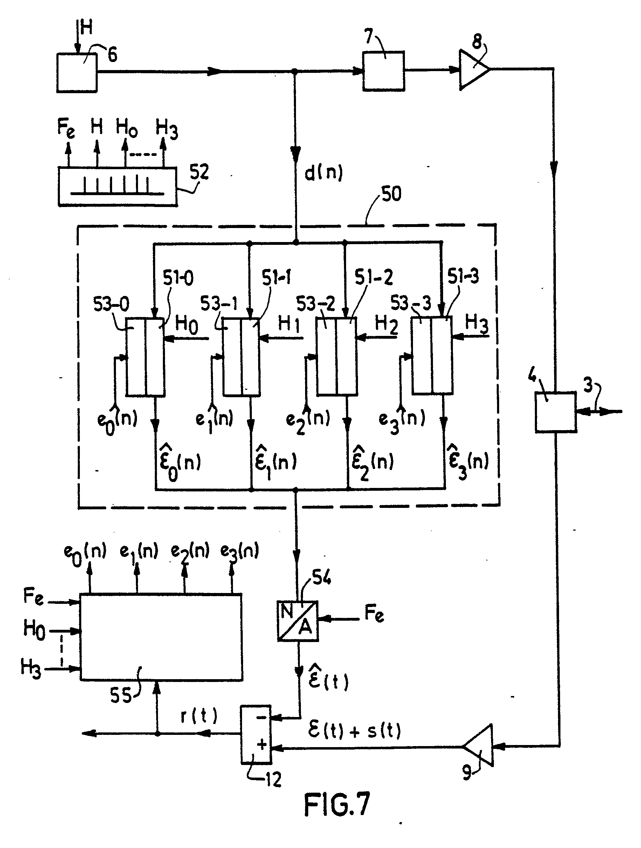

Un annuleur d'écho fonctionnant avec une fréquence d'échantillonnage $F_e$ égale par exemple à 4 fois la fréquence 1/T des données émises, a une structure connue en soi qui peut être représentée sous la forme montrée sur la figure 7. Dans cet annuleur d'écho, le signal de données d(n) fourni par la source de données 6 est appliqué dans le dispositif de traitement numérique 50 à 4 filtres transversaux 51—0, 51—1, 51—2, 51—3. Dans ces filtres le signal d(n) est échantillonné à l'aide des signaux d'horloge $H_0$, $H_1$, $H_2$, $H_3$ fournis par le générateur d'horloge 52, ayant la même fréquence 1/T, mais décalés entre eux d'une période d'échantillonnage $T_e$ de l'annuleur d'écho. Les instants d'échantillonnage produits par les signaux d'horloge $H_0$ à $H_3$ sont donnés au Tableau II ci-dessus:

# 0 107 233

TABLEAU II

| Horloge | Instants d'échantillonnage |
|---------|----------------------------|
| $H_0$ | $4nT_e$ |
| $H_1$ | $(4n - 1) T_e$ |
| $H_2$ | $(4n - 2) T_e$ |
| $H_3$ | $(4n - 3) T_e$ |

Dans chaque filtre transversal 51—0 à 51—3 sont calculés à la fréquence 1/T les échantillons des signaux de copie d'écho $\hat{\varepsilon}_o(n)$ à $\hat{\varepsilon}_3(n)$, à l'aide de coefficients qui sont réglés dans les circuits de réglage 53—0 à 53—3. Les échantillons des signaux $\hat{\varepsilon}_o(n)$ à $\hat{\varepsilon}_3(n)$ décalés entre eux de la période $T_e$ sont multiplexés et appliqués à l'entrée du convertisseur numérique-analogique 54 qui fonctionne à la fréquence d'échantillonnage $F_e = 4/T$, fournie par le générateur d'horloge 52. Le signal de copie d'écho analogique $\hat{\varepsilon}(t)$ est appliqué, comme dans l'annuleur d'écho de la figure 1, au circuit de différence 12 qui fournit le signal de différence r(t), dans lequel le signal d'écho $\varepsilon(t)$ est annulé après la convergence de l'annuleur d'écho. En vue de réglage des coefficients des filtres transversaux 51—0 à 51—3 le signal de différence r(t) est appliqué au circuit de calcul 55 chargé d'engendrer les signaux d'erreur $e_o(n)$ à $e_3(n)$ à utiliser dans les circuits de réglage des coefficients 53—0 à 53—3.

La présente invention s'applique à cette structure connue d'annuleur d'écho, pour calculer les signaux d'erreur $e_o(n)$ à $e_3(n)$. Ces signaux d'erreur peuvent être calculés conformément aux formules (7), (8) ou (9), en utilisant comme présents instants d'échantillonnage les instants indiqués sur le Tableau II et comme instants d'échantillonnage antérieurs des instants séparés des premiers par la période T des données. Par exemple, dans le cas d'un signal de données à deux niveaux, l'application de la formule (8) donne l'expression suivante pour les signaux d'erreur $e_o(n)$ à $e_3(n)$:

$$
(20)\quad
\begin{cases}
e_0(n) = r(4n) - r(4n - 4) . \mathrm{Sgn}\big[r(4n)\big] . \mathrm{Sgn}\big[r(4n - 4)\big] \\[2ex]
e_1(n) = r(4n - 1) - r(4n - 5) . \mathrm{Sgn}\big[r(4n - 1)\big] . \mathrm{Sgn}\big[r(4n - 5)\big] \\[2ex]
e_2(n) = r(4n - 2) - r(4n - 6) . \mathrm{Sgn}\big[r(4n - 2)\big] . \mathrm{Sgn}\big[r(4n - 6)\big] \\[2ex]
e_3(n) = r(4n - 3) - r(4n - 7) . \mathrm{Sgn}\big[r(4n - 3)\big] . \mathrm{Sgn}\big[r(4n - 8)\big]
\end{cases}
$$

L'annuleur d'écho de la figure 7 formé de quatre filtres transversaux 51—0 à 51—3 dont les coefficients sont réglés suivant des formules de récurrence du type de la formule (4), en utilisant des signaux d'erreur $e_o(n)$ à $e_3(n)$ formés suivant les formules (20), se comporte comme s'il était constitué de 4 sous-annuleurs d'écho dont chacun a un fonctionnement identique à celui de la figure 1 et indépendant du fonctionnement des autres sous-annuleurs d'écho. La convergence de ces 4 sous-annuleurs d'écho est obtenue dans les mêmes conditions que l'annuleur d'écho de la figure 1. Dans ces sous-annuleurs d'écho, on peut utiliser pour le réglage des coefficients des filtres 51—0, 51—1, 51—2, et 51—3, les signaux $\mathrm{Sgn}[e_o(n)]$, $\mathrm{Sgn}(e_1(n)]$, $\mathrm{Sgn}(e_2(n)]$ et $\mathrm{Sgn}(e_3(n)]$, formés aux instants déterminés par les signaux d'horloge $H_0$, $H_1$, $H_2$, $H_3$. Ces signaux peuvent être formés chacun suivant le schéma de la figure 4. On peut aussi utiliser pour le réglage des coefficients des filtres 51—0 à 51—3 la variante de l'invention consistant à utiliser des signaux $E_o(n)$ à $E_3(n)$ formés à partir des signaux $\mathrm{Sgn}[e_o(n)]$ à $\mathrm{Sgn}[e_3(n)]$ et à partir des signaux $\mathrm{Sgn}[r_o(n)]$ a $\mathrm{Sgn}[r_3(n)]$ formés par échantillonnage du signal $\mathrm{Sgn}[r(t)]$ aux instants déterminés par les signaux d'horloge $H_0$ à $H_3$. Les signaux $E_o(n)$ à $E_3(n)$ peuvent être formés chacun suivant le schéma de la figure 6.

On peut remarquer ici que l'indépendance de fonctionnement complète des 4 sous-annuleurs d'écho de la figure 6 est due au fait que dans chacun des signaux d'erreur $e_o(n)$ à $e_3(n)$, servant au réglage des coefficients des filtres, et formés suivant les formules (20), on utilise deux valeurs du signal de différence r(t) qui sont prises à des instants séparés par la période T des données et qui sont indépendantes puisque les données sont indépendantes. si ces deux valeurs du signal de différence sont séparées par une fraction

12

de la période T, elles ne sont pas toujours indépendantes et l'on n'a plus une indépendance de fonctionnement des 4 sous-annuleurs d'écho. Néanmoins, on a pu constater pour certains codes tels que le code biphase que l'ensemble formé par 4 sous-annuleurs d'écho peut converger pratiquement, en utilisant par exemple deux valeurs du signal de différence r(t), prises à des instants séparés de T/2.

**Revendications**

1. Annuleur d'écho utilisé dans un modem de transmission de données pour annuler dans le signal en bande de base de la voie réception, un signal d'écho engendré par le signal de données de la voie émission, cet annuleur d'écho comprenant un circuit de différence pour former un signal de différence entre le signal de la voie réception et un signal de copie d'écho, ce signal de différence étant appliqué à un circuit de décision restituant le signal de données, le signal de copie d'écho étant formé à une fréquence d'échantillonnage $F_e$ au moins égale à la fréquence 1/T des données de la voie émission, à l'aide d'un dispositif de traitement numérique réglable qui est connecté à la voie émission et qui comprend au moins un filtre transversal fonctionnant à des instants d'échantillonnage de fréquence 1/T et ayant des coefficients qui sont réglés pour rendre minimale une fonction prédéterminée d'un signal d'erreur, caractérisé en ce que ledit signal d'erreur utilisé pour modifier les coefficients de chaque filtre transversal est déterminé à un présent instant d'échantillonnage en formant la différence entre la valeur du signal de sortie dudit circuit de différence à cet instant d'échantillonnage et la valeur du signal de sortie du circuit de différence à un instant d'échantillonnage antérieur, préalablement multipliée par le rapport de la valeur du signal de données restitué au présent instant d'échantillonnage à la valeur du signal de données restitué à l'instant d'échantillonnage antérieur, la modification des coefficients étant effectuée ou non selon que les deuxdites valeurs du signal de données restitué sont différentes de zéro ou au moins l'une de ces deux valeurs est égale à zéro.

2. Annuleur d'écho selon la revendication 1, caractérisé en ce que le présent instand d'échantillonnage de chaque filtre transversal et l'instant d'échantillonnage antérieur sont séparés par la période T des donnés ou une fraction de cette période.

3. Annuleur d'écho selon la revendication 1 ou 2, caractérisé en ce que les coefficients de chaque filtre transversal sont réglés de façon à rendre minimale la valeur quadratique moyenne dudit signal d'erreur correspondant à ce filtre.

4. Annuleur d'écho selon la revendication 3, caractérisé en ce qu'il comporte un circuit de réglage des coefficients de chaque filtre transversal, agencé pour régler chaque coefficient d'un filtre par récurrences successives, selon la formule de récurrence:

$$C_i(n + 1) = C_i(n) + \beta.d(n - i).e(n)$$

$C_i(n)$ et $C_i(n + 1)$ étant les valeurs d'un coefficient $C_i$ aux récurrences n et n + 1, β étant un coefficient inférieur à 1, d(n − i) étant une donnée stockée dans le filtre transversal, dérivée de la voie émission, et correspondant au coefficient $C_i$, e(n) étant ledit signal d'erreur.

5. Annuleur d'écho selon la revendication 4, convenant pour corriger un signal de données reçu, résultant du côté émission d'un signal de données en bande de base à deux niveaux ou d'un signal de données en bande de base à trois niveaux résultant d'un codage pseudoternaire de donnés à deux niveaux, le circuit de décision restituant un signal de donnés à deux niveaux positif et négatif, cet annuleur d'écho étant caractérisé en ce qu'il comporte pour chaque filtre transversal un circuit de calcul pour former le signal d'erreur e(n) comme la différence ou la somme des valeurs du signal de sortie du circuit de différence au présent instant d'échantillonnage du filtre et à un instant d'échantillonnage antérieur selon que les valeurs du signal de données restitué au présent instant d'échantillonnage et à l'instant d'échantillonnage antérieur ont le même signe ou des signes différents.

6. Annuleur d'écho selon la revendication 3, caractérisé en ce qu'il comporte un circuit de réglage des coefficients de chaque filtre transversal, agencé pour régler chaque coefficient d'un filtre par récurrences successives, selon la formule de récurrence:

$$C_i(n + 1) = C_i(n) + \beta.d(n - i).Sgn[e(n)]$$

$C_i(n)$ et $C_i(n + 1)$ étant les valeurs d'un coefficient $C_i$ aux récurrences n et n + 1, β étant un coefficient inférieur à 1, d(n − i) étant une donnée stockée dans le filtre transversal, dérivée de la voie émission, et correspondant au coefficient $C_i$, e(n) étant ledit signal d'erreur, Sgn[e(n)] étant un signal caractérisant le signe dudit signal d'erreur e(n).

7. Annuleur d'écho selon la revendication 3, caractérisé en ce qu'il comporte un circuit de réglage des coefficients de chaque filtre transversal, agencé pour régler chaque coefficient d'un filtre par récurrences successives selon la formule de récurrence:

$$C_i(n + 1) = C_i(n) + \beta.d(n - i).E(n)$$

$C_i(n)$ et $C_i(n + 1)$ étant les valeurs d'un coefficient $C_i$ aux récurrences n et n + 1, β étant un coefficient

13

inférieur à 1, d(n – i) étant une donnée stockée dans le filtre transversal, dérivée de la voie émission, et correspondant au coefficient $C_i$, e(n) étant ledit signal d'erreur, E(n) étant un signal de valeur nulle quand le signe du signal d'erreur caractérisé par Sgn[e(n)] et le signe du signal de sortie du circuit de différence sont différents et de valeur + 1 ou −1 quand ces deux signes sont en même temps positifs ou négatifs.

8. Annuleur d'écho selon la revendication 6 ou 7, convenant pour corriger un signal de données reçu résultant du côté émission d'un signal de données en bande de base à deux niveaux ou d'un signal de données en bande de base à trois niveaux résultant d'un codage pseudoternaire de données à deux niveaux, le circuit de décision restituant un signal de données à deux niveaux positif et négatif, cet annuleur d'écho étant caractérisé en ce qu'il comporte pour chaque filtre transversal un circuit de calcul pour former le signal Sgn[e(n)] comme le signe de la différence ou de la somme des valeurs du signal de sortie du circuit de différence au présent instant d'échantillonnage du filtre et à instant d'échantillonnage antérieur selon que les valeurs du signal de données restitué au présent instant d'échantillonnage et à l'instant d'échantillonnage antérieur ont le même signe ou des signes différents.

9. Annuleur d'écho selon la revendication 8, caractérisé en ce que, pour former le signal Sgn[e(n)], utilisé dans chaque filtre transversal, ledit circuit de calcul comporte le montage en cascade de deux circuits d'échantillonnage et de maintien actionnés par deux signaux d'horloge complémentaires ayant la fréquence d'échantillonnage du filtre, le signal de sortie du circuit de différence étant appliqué à l'entrée de ce montage en cascade et à une entrée de deux circuits comparateurs, le signal de sortie dudit montage en cascade étant appliqué à l'autre entrée d'un desdits circuits comparateurs et, par l'intermédiaire d'un amplificateur inverseur, à l'autre entrée de l'autre circuit comparateur, ces deux circuits comparateurs formant respectivement des signaux Δ(n) et Σ(n) caractérisant le signe de la différence et de la somme des valeurs du signal de sortie du circuit de différence à un présent instant d'échantillonnage du filtre et à un instant d'échantillonnage antérieur.

10. Annuleur d'écho selon la revendication 8 ou 9, caractérisé en ce que pour former le signal Sgn[e(n)] utilisé dans chaque filtre transversal, ledit circuit de calcul comporte un troisième circuit comparateur pour former le signe du signal de sortie du circuit de différence, un circuit OU Exclusif dont une entrée reçoit le signal de sortie de ce circuit comparateur et l'autre entrée reçoit le signal de sortie d'une bascule échantillonnant le signal de sortie dudit circuit comparateur à la fréquence d'échantillonnage du filtre, ce circuit OU Exclusif fournissant un signal C(n) caractérisant le produit des signes desdites données restituées à un présent instant d'échantillonnage du filtre et à un instant d'échantillonnage antérieur.

11. Annuleur d'écho selon les revendications 9 et 10, caractérise en ce que les signaux Δ(n), Σ(n), C(n) sont appliqués à des bascules pour être échantillonnés à la fréquence d'échantillonnage du filtre, les échantillons des signaux Δ(n) et Σ(n) étant appliqués à un dispositif d'aiguillage commandé par les échantillons du signal C(n) pour former le signal Sgn[e(n)] par des échantillons du signal Δ(n) ou du signal Σ(n).

12. Annuleur d'écho selon la revendication 11, comportant pour chaque filtre transversal un circuit de calcul pour former ledit signal E(n) utilisé pour le réglage des coefficients du filtre conformément à la revendication 7, caractérisé en ce que ledit circuit de calcul comporte un dispositif logique, agencé pour former à partir du signal Sgn[e(n)] fourni par ledit dispositif d'aiguillage et à partir du signal de sortie dudit troisième circuit comparateur, un signal E(n) ayant la valeur zéro quand les signes de ces deux signaux sont différents et la valeur +1 ou − 1 quand ces deux signes sont en même temps positifs ou négatifs.

**Patentansprüche**

1. Echokompensator, der in einem Datenübertragungssystem dazu verwendet wird, in dem Basisbandsignal der Empfangsstrecke ein von dem Datensignal der Sendestrecke erzeugtes Echosignal auszugleichen, wobei dieser Echokompensator eine Differenzschaltung aufweist zum Bilden eines Differenzsignals zwischen dem Signal der Empfangsstrecke und einem Echockopiesignal, wobei dieses Differenzsignal einer Entscheidungsschaltung zugeführt wird zum Zurückerhalten des Datensignals, wobei das Echokopiesignal mit einer Abtastfrequenz $F_e$ mindestens gleich der Frequenz 1/T der Daten der Sendenstrecke mit Hilfe einer einstellbaren digitalen Signalverarbeitungsanordnung gebildet wird, die mit der Sendestrecke verbunden ist und mindestens ein Transversalfilter aufweist, das zu Abtastzeitpunkten mit der Frequenz 1/T wirksam ist und das Koeffizienten aufweist, die zur Minimierung einer vorbestimmten Funktion eines Fehlersignals eingestellt werden, dadurch gekennzeichnet, dass zum Andern der Koeffizienten jedes Transversalfilters verwendete Fehlersignal zu einem Augenblicklichen Abtastzeitpunkt dadurch bestimmt wird, dass die Differenz zwischen deM Wert des Ausgangssignals der Differenzschaltung zu diesem Abtastzeitpunkt und dem Wert des Ausgangssignals der Differenzschaltung zu einem vorhergehende Abtastzeitpunkt gebildet wird, wobei dieser letztgenannte Wert vorher mit dem Verhältnis des Wertes des zu dem augenblicklichen Abtastzeitpunkt zurückerhaltenen Datensignals zu dem Wert des zu dem vorhergehenden Abtastzeitpunkt zurückerhaltenen Datensignals multipliziert ist, worbei die Anderung der Koeffizienten wohl oder nicht durchgefürht wird, je nachdem die beiden genannten Werte für das zurückerhaltene Datensignal von Null abweichen oder mindestens einer der beiden genannten Werte gleich Null ist.

2. Echokompensator nach Anspruch 1, dadurch gekennzeichnet, dass der augenblickliche

14

Abtastzeitpunkt jedes Transversalfilters und der vorhergehende Abtastzeitpunkt durch die Periode T der Daten oder durch einen Teil dieser Periode getrennt sind.

3. Echokompensator nach Anspruch 1 oder 2, dadurch gekennzeichnet, dass die Koeffizienten jedes Transversalfilters derart eingestellt werden, dass der mittlere quadratische Wert des genannten diesem Filter entsprechenden Fehlersignals minimiert wird.

4. Echokompensator nach Anspruch 3, dadurch gekennzeichnet, dass dieser mit einer Schaltungsanordnung zum Einstellen der Koeffizienten jedes Transversalfilters versehen ist, die zum iterativen Einstellen jedes Koeffizienten eines Filters entsprechend der Rekursionsformel: $C_i(n + 1) = C_i(n) + \beta.d(n - 1).e(n)$ eingerichtet ist, wobei $C_i(n)$ und $C_i(n + 1)$ die Werte eines Koeffizienten $C_i$ bei Iterationsschritten n und n + 1 sind, $\beta$ ein Koeffizient kleiner als 1 ist, $d(n - i)$ ein in dem Transversalfilter gespeichertes Datensymbol ist, das von der Sendestrecke abgeleitet ist und dem Koeffizienten $C_i$ entspricht, und $e(n)$ das genannte Fehlersignal ist.

5. Echokompensator nach Anspruch 4 zum Korrigieren eines empfangenen Datensignals, das sendeseitig von einem Baisbanddatensignal mit zwei Pegeln oder von einem Basisbanddatensignal mit drei Pegeln herrührt, das durch pseudo-ternäre Codierung von Daten mit zwei Pegeln erhalten worden ist, wobei die Entscheidungsschaltung ein Datensignal wiederherstellt mit zwei Pegeln, positiv und negativ, dadurch gekennzeichnet, dass der Echokompensator für jedes Transversalfilter eine Rechenschaltung aufweist zum Bilden des Fehlersignals $e(n)$ als die Differenz oder die Summe der Werte des Ausgangssignals der Differenzschaltung zu dem augenblicklichen Abtastzeitpunkt des Filters und zu einem vorhergehenden Abtastzeitpunkt, je nachdem die Werte des zurückerhaltenen Datensignals zu dem augenblicklichen Abtastzeitpunkt und zu dem vorhergenden Abtastzeitpunkt dasselbe Vorzeichen oder unterschiedliche Vorzeichen aufweisen.

6. Echokompensator nach Anspruch 3, dadurch gekennzeichnet, dass dieser mit einer Schaltungsanordnung zum Einstellen der Koeffizienten jedes Transversalfilters versehen ist, die zum iteratieven Einstellen jedes Koeffizienten eines Filters entsprechtend der Rekursionsformel: $C_i(n + 1) = C_i + \beta.d(n - i).Sgn[e(n)]$ eingerichtet ist, wobei $C_1(n)$ und $C_i(n + 1)$ die Werte eines Koeffizienten $C_i$ bei Iterationsschritten n und n + 1 sind, $\beta$ ein Koeffizent kleiner als 1 ist, $d(n - 1)$ ein in dem Transversalfilter gespeichertes Datensymbol ist, das von der Sendestrecke abgeleitet ist und dem Koeffizienten $C_i$ entspricht, $e(n)$ das genannte Fehlersignal ist, und $Sg[e(n)]$ ein Signal ist, das das Vorzeichendes Fehlerssignals $e(n)$ kennzeichnet.

7. Echokompensator nach Anspruch 3, dadurch gekennzeichnet, dass dieser mit einer Schaltungsordnung zum Einstellen der Koeffizienten jedes Transversalfilters versehen ist, die zum iterativen Einstellen jedes Koeffizienten eines Filters entsprechend der Rekursionsformel: $C_i(n + 1) = C_i(n) + \beta.d(n - 1).E(n)$ eingerichtet ist, wobei $C_i(n)$ und $C_i(n + 1)$ die Werte eines Koeffizienten $C(i)$ bei Iterationsschritten n und n + 1 sind, $\beta$ ein Koeffizient kleiner als 1 ist, $d(n - 1)$ ein in dem Transversalfilter gespeichertes Datensymbol ist, das von der Sendestrecke abgeleitet ist und dem Koeffizienten $C_1$ entspricht, $e(n)$ das genannte Fehlersignal ist, $E(n)$ ein signal mit dem Wert Null ist, wenn das durch $Sgn[e(n)]$ bezeichnete Vorzeichen des Fehlersignals und das Vorzeichen des Augangssignals der Differenzschaltung unterschiedlich sind, und mit dem Wert +1 oder −1 wenn diese beiden Vorzeichen gleichzeitig positiv bzw. gleichzeitig negativ sind.

8. Echokompensator nach Anspruch 6 oder 7 zum Korrigieren eines empfangen Datensignals, das sendeseitig von einem Basisbanddatensignal mit zwei Pegeln oder von einem Basisbanddatensignal mit drei Pegeln herrührt, das durch pseudo-ternäre Codierung von Daten mit zwei Pegeln erhalten worden ist, wobei die Entscheidungsschaltung ein Datensignal wiederherstellt mit zwei Pegeln, positiv und negativ, dadurch gekennzeichnet, dass der Echokompensator für jedes Transversalfilter eine Rechenschaltung aufweist zum Bilden des Signals $Sgn[e(n)]$ als das Vorzeichen der Differenz oder der Summe der Werte des Ausgangssignals der Differenzschaltung zu dem augenblicklichen Abtastzeitpunkt des Filters und zu einem vorhergehenden Abtastzeitpunkt je nachdem die Werte des zurückerhaltenen Datensignals zu dem augenblicklichen Abtastzeitpunkt und zu dem vorhergehenden Abtastzeitpunkt dasselbe Vorzeichen oder unterschiedliche Vorzeichen aufweisen.

9. Echokompensator nach Anspruch 8, dadurch gekennzeichnet, dass zum Bilden des in jedem Transversalfilter verwendeten Signals $Sgn[e(n)]$ dei Rechenschaltung die Reihenschaltung aus zwei Abtast- und Halteschaltungen aufweist, die durch zwei komplementäre Taktsignale mit der Abtastfrequenz des Filters gesteuert werden, wobei das Ausgangssignal der Differenzschaltung dem Eingang der Reihenschaltung sowie einem Eingang zweier Vergleichsschaltungen zugeführt wird, wobei das Ausgangssignal der genannten Reihenschaltung dem anderen Eingang einer der genannten Vergeleichsschaltungen und über einen Umkehrverstärker dem anderen eingang der anderen Vergleichsschaltung zugeführt wird, wobei diese zwei Vergleichsschaltungen Signale $\Delta(n)$ und $\Sigma(n)$ bilden, die das Vorzeichen der Differenz bzw. der Summe der Werte des Ausgangssignals der Differenzschaltung zu einem augenblicklichen Abtastzeitpunkt des Filters und zu einem vorhergehenden Abtastzeitpunkt kennzeichnen.

10. Echokompensator nach Anspruch 8 oder 9, dadurch gekennzeichnet, dass zum Bilden des in jedem Transversalfilter verwendeten Signals $Sgn[e(n)]$ die Rechenschaltung mit einer dritten Vergeleichsschaltung versehen ist zum Bilden des Vorzeichens des Ausgangssignals der Differenzschaltung, mit einer Exklusiv-ODER-Schaltung, von der ein Eingang das Ausgangssignal dieser Vergleichsschaltung und der andere Eingang das Ausgangssignal einer Flip-Flop-Schaltung erhält, die das

15

Ausgangssignal der genannten Vergleichsschaltung mit der Abtastfrequenz des Filters abtastet, wobei diese Exklusiv-ODER-Schaltung ein Signal C(n) liefert, das das Produkt der Vorzeichen der genannten zurückerhaltenen Daten zu einem augenblicklichen Abtastzeitpunkt des Filters und zu einem vorhergehenden Abtastzeitpunkt kennzeichnet.

11. Echokompensator nach Anspruch 9 und 10, dadurch gekennzeichnet, dass die Signale $\Delta(n)$, $\Sigma(n)$ und C(n) Flip-Flop-Schaltungen zugeführt werden um mit der Abtastfrequenz des Filters abgetastet zu werden, wobei dei Abtastwerte der Signale $\Delta(n)$ und $\Sigma(n)$ einer Weichenschaltung zugeführt werden, die von den Abtastwerten des Signals C(n) gesteuert wird zum Bilden des Signals Sgn[e(n)] durch Abtastwerte des Signals $\Delta(n)$ oder des Signals $\Sigma(n)$.

12. Echokompensator nach Anspruch 11, dadurch gekennzeichnet, dass dieser für jedes Transversalfilter eine Rechenschaltung aufweist zum Bilden des genannten Signals E(n), das zum Einstellen der Koeffizienten des Filters nach Anspruch 7 verwendet wird, dadurch gekennzeichnet, dass die genannte Rechenschaltung mit einer logischen Schaltung versehen ist, die dazu eingerichtet ist, aus dem von der genannten Weichenschaltung gelieferten Signal Sgn[e(n)] und aus dem Ausgangssignal der genannten dritten Vergleichsschaltung ein Signal E(n) mit dem Wert Null zu bilden, wenn die Vorzeichen dieser beiden Signale unterschiedlich sind, und mit dem Wert +1 oder −1, wenn diese beiden Vorzeichen gleichzeitig positiv bzw. glechzeitig negativ sind.

## Claims

1. An echo canceller used in a data transmission modem for cancelling in the baseband signal of the receive path, an echo signal produced by the data signal of the transmit path, this echo canceller comprising a difference circuit for forming a difference signal between the signal of the receive path and an echo copy signal, this difference signal being applied to a decision circuit recovering the data signal, the echo copy signal being formed at a sampling frequency $F_e$, which is at least equal to the frequency 1/T of the data of the transmit path, with the aid of an adjustable digital processing arrangement connected to the transmit path and comprising at least one transversal filter operative at sampling instants of frequency 1/T and having coefficients which are adjusted to minimize a predetermined function of an error signal, characterized in that said error signal used to modify the coefficients of each transversal filter is determined at an actual sampling instant by forming the difference between the value of the output signal of said difference circuit at that sampling instant and the value of the output signal of the difference circuit at a previous sampling instant previously multiplied by the ratio between the value of the recovered data signal at the actual sampling instant and the value of the recovered data signal at the previous sampling instant, the modification of the coefficients being effected or not effected depending on whether the said two values of the recovered data signal differ from zero or at least one of these two values is equal to zero.

2. An echo canceller as claimed in Claim 1, characterized in that the actual sampling instant of each transversal filter and the previous sampling instant are separated from each other by the period T of the data or a fraction of this period.

3. An echo canceller as claimed in Claim 1 or 2, characterized in that the coefficients of each transversal filter are adjusted such as to minimize the mean-square value of said error signal corresponding to this filter.

4. An echo canceller as claimed in Claim 3, characterized in that it comprises an adjusting circuit for the coefficients of each transversal filter, arranged for iteratively adjusting each coefficient of a transversal filter in accordance with the recursion formula:

$$C_i(n + 1) = C_i(n) + \beta.d(n - i).e(n)$$

$C_i(n)$ and $C_i(n + 1)$ being the values of a coefficient $C_i$ at the iterations $n$ and n + 1; $\beta$ being a coefficient less than 1; d(n − i) being a datum stored in the transversal filter, derived from the transmit path, and corresponding to the coefficient $C_i$; e(n) being said error signal.

5. An echo canceller as claimed in Claim 4, suitable to correct a received data signal which results from a two-level baseband data signal at the transmitter end or from a three-level baseband data signal produced by a pseudo-ternary encoding of two-level data, the decision circuit recovering a data signal having a positive and a negative level, this echo canceller being characterized in that it comprises, for each transversal filter, a calculating circuit for forming the error signal e(n) as the difference or the sum of the values of the output signal of the difference circuit at the actual sampling instant of the filter and at a previous sampling instant, depending on whether the values of the recovered data signal at the actual sampling instant and at the previous sampling instant have the same sign or different signs.

6. An echo canceller as claimed in Claim 3, characterized in that it comprises an adjusting circuit for the coefficients of each transversal filter, arranged for iteratively adjusting each coefficient of a filter in accordance with the recursion formula:

$$C_i(n + 1) = C_i(n) + \beta.d(n - i).Sgn[e(n)]$$

$C_i(n)$ and $C_i(n + 1)$ being the values of a coefficient $C_i$ at the iterations $n$ and n + 1; $\beta$ being a coefficient less than 1; d(n − i) being a datum stored in the transversal filter, derived from the transmit path, and corresponding to the coefficient $C_i$; e(n) being said error signal; Sgn[e(n)] being a signal characterizing the sign of said error signal e(n).

7. An echo canceller as claimed in Claim 3, characterized in that it comprises an adjusting circuit for the coefficients of each transveral filter, arranged for iteratively adjusting each coefficient of a filter in accordance with the recursion formula:

$$C_i(n + 1) = C_i(n) + \beta.d(n - i).E(n)$$

$C_i(n)$ and $C_i(n + 1)$ being the values of a coefficient $C_i$ at the iterations $n$ and n + 1; β being a coefficient less than 1; d(n − i) being a datum stored in the transversal filter, derived from the transmit path, and corresponding to the coefficient $C_i$; E(n) being a signal having the value zero when the sign of the error signal characterized by Sgn[e(n)], e(n) being said error signal, and the sign of the output signal of the difference circuit are different, and the value +1 or −1 when these two signs are simultaneously positive or negative.

8. An echo canceller as claimed in Claim 6 or 7, suitable for correcting a received data signal which results from a two-level baseband data signal at the transmitter end or from a three-level baseband data signal produced by a pseudo-ternary encoding of two-level data, the decision circuit recovering a data signal having a positive and a negative level, this echo canceller being characterized in that it comprises, for each transversal filter, a calculating circuit for forming the signal Sgn[e(n)] as the sign of the difference or of the sum of the values of the output signal of the difference circuit at the actual sampling instant of the filter and at a previous sampling instant, depending on whether the values of the recovered data signal at the actual sampling instant and at the previous sampling instant have the same sign or different signs.

9. An echo canceller as claimed in Claim 8, characterized in that, for forming the signal Sgn[e(n)] used in each transversal filter, said calculating circuit comprises the cascade arrangement of two sample-and-hold circuits activated by two complementary clock signals having the sampling frequency of the filter, the output signal of the difference circuit being applied to the input of this cascade arrangement and to one input of two comparator circuits, the output signal of said cascade arrangement being applied to the other input of one of the said comparator circuits and, via an inverter amplifier, to the other input of the other comparator circuit, these two comparator circuits forming the signals Δ(n) and Σ(n), respectively, which characterize the sign of the difference and of the sum of the values of the output signal of the difference circuit at an actual sampling instant of the filter and at a previous sampling instant.

10. An echo canceller as claimed in Claim 8 or 9, characterized in that, for forming the signal Sgn[e(n)] used in each transversal filter, said calculating circuit comprises a third comparator circuit for forming the sign of the output signal of the difference circuit, an Exclusive-OR gate one input of which receives the output signal of this third comparator circuit and the other input receives the output signal of a bistable trigger circuit sampling the output signal of this third comparator circuit at the sampling frequency of the filter, this Exclusive-OR gate supplying a signal C(n) characterizing the product of the signs of said recovered data at an actual sampling instant of the filter and at a previous sampling instant.

11. An echo canceller as claimed in Claim 9 and 10, characterized in that the signals Δ(n), Σ(n), C(n) are applied to bistable trigger circuits for being sampled at the sampling frequency of the filter, the samples of the signals Δ(n) and Σ(n) being applied to a switch controlled by the samples of the signal C(n) for forming the signal Sgn[e(n)] by the samples of the signal Δ(n) or of the signal Σ(n).

12. An echo canceller as claimed in Claim 11, comprising, for each transversal filter, a calculating circuit for forming said signal E(n) used to adjust the coefficients of the filter in accordance with Claim 7, characterized in that the said calculator circuit comprises a logic circuit arranged for forming from the signal Sgn[e(n)] supplied by said switch and from the output signal of said third comparator circuit a signal E(n) having the value zero when the signs of these two signals are different and the value +1 or −1 when these two signs are simultaneously positive or negative.

FIG.1

FIG.2

FIG.3

FIG.4

FIG.5

FIG.6

FIG.7